# EUROPÄISCHE PATENTSCHRIFT

(11) **EP 3 027 344 B1**
(45) Veröffentlichungstag und Bekanntmachung des Hinweises auf die Patenterteilung: **25.05.2022**
(21) Anmeldenummer: 14748115.4
(22) Anmeldetag: 29.07.2014
(51) Int. Cl.: B23F 5/22, B23F 23/12

(54) **VERZAHNUNGSMASCHINE UND VERFAHREN ZUM BEARBEITEN EINER VERZAHNUNG**
GEAR CUTTING MACHINE AND METHOD FOR MACHINING GEAR TEETH
MACHINE À TAILLER LES DENTURES SERVANT À USINER UNE DENTURE

(30) Priorität: 30.07.2013 DE 102013012660
(43) Veröffentlichungstag der Anmeldung: 08.06.2016
(73) Patentinhaber: Gleason-Pfauter Maschinenfabrik GmbH, 71636 Ludwigsburg (DE)
(72) Erfinder: PHILIPPIN, Matthias, 71277 Rutesheim (DE)
(74) Vertreter: Leinweber & Zimmermann
(86) Internationale Anmeldenummer: PCT/EP2014/002068
(87) Internationale Veröffentlichungsnummer: WO 2015/014483

(56) Entgegenhaltungen:
- EP-A2- 0 500 104
- WO-A1-2011/010209
- DE-A1- 10 113 653
- US-A- 5 228 814

## Beschreibung

Die Erfindung betrifft eine Verzahnungsmaschine < > Bearbeiten von Verzahnungen mit einem um seine Werkzeugachse drehbar angetriebenen Verzahnungswerkzeug, mit einer eine zur Aufnahme des Verzahnungswerkzeugs vorgesehene Werkzeughalterung aufweisenden und zur Einstellung einer gewünschten Orientierung der Werkzeugachse drehbar an einem Träger gelagerten Anordnung, einer Bewegungseinrichtung, mit der eine Einstellung der Drehlage der Anordnung bewirkbar ist, und einer Arretiereinrichtung, mit der die Anordnung gegen ein Verdrehen aus einer eingestellten Drehlage arretierbar ist, sowie ein Verfahren zum Bearbeiten einer Verzahnung.

Verzahnungsmaschinen dieser Art sind seit geraumer Zeit bestens bekannt, beispielsweise in Form sogenannter Sechs-Achs-Wälzfräsmaschinen. Ein typischer Aufbau derartiger Wälzfräsmaschinen wird im folgenden erläutert. Werkstückseitig weisen sie eine in einem Maschinenbett drehbar angetrieben gelagerte Werkstückspindel auf, auf der ein zu bearbeitendes Werkstück aufgespannt ist und deren Werkstückspindelachse eine erste Maschinenachse der Wälzfräsmaschine darstellt. Die fünf weiteren Maschinenachsen sind werkzeugseitig vorgesehen.

Eine Linearbewegungsachse eines an dem Maschinenbett abgestützten Horizontalschlittens bildet eine der Zustellung dienende zweite Maschinenachse der Wälzfräsmaschine, und eine Linearbewegungsachse eines am Horizontalschlitten vorgesehenen Vertikalschlittens stellt eine dem Vorschub dienende dritte Maschinenachse einer solchen Verzahnungsmaschine dar.

An dem Vertikalschlitten ist ein Werkzeugkopf drehbar gelagert, und die Drehachse dieser drehbaren Lagerung stellt eine vierte Bewegungsachse der Wälzfräsmaschine dar, mit der die Orientierung der Achse des Wälzfräsers passend zu dem gewünschten Schrägungswinkel der herzustellenden Verzahnung eingestellt wird. Die drehbare Lagerung des Fräskopfes ist dabei derart angeordnet, daß der Fräskopf noch eine lineare Shift-Bewegung ausüben kann, und zwar über einen weiteren Linearschlitten, dessen Bewegungsachse die fünfte Bewegungsachse der Wälzfräsmaschine ist. Diese fünfte Achse, entlang der geshiftet wird, ist somit nicht raumfest, sondern ändert seine Orientierung mit Drehung um die Drehachse. Sie fällt üblicherweise mit der Drehachse des Wälzfräsers zusammen. Die sechste Maschinenachse der Wälzfräsmaschine ist schließlich die Drehachse einer drehend angetriebenen Werkzeugspindel für den Wälzfräser selbst.

Während vor der Entwicklung vollständig CNC-gesteuerter Maschinenachsen die beiden Hauptbearbeitungsachsen, nämlich die für die Drehung des Werkstücks und die Drehung des Wälzfräsers, mechanisch zur Sicherstellung der richtigen Zahneingriffsbedingungen miteinander gekoppelt waren, erfolgt die dazu erforderliche Synchronisation der jeweiligen Drehlagen der Achsen mittlerweile elektronisch über die bekannten CNC-Steuerungen.

Auch die Nebenmaschinenachsen, mit denen die gegenseitige räumliche Lage zwischen Werkstück und Wälzfräser eingestellt wird, nämlich die oben beschriebenen zweiten bis fünften Maschinenachsen (Zustellung, Vorschub, Drehlage und Shiften) werden durch CNC-gesteuerte Servomotoren angetrieben. Für die meisten Achsen kommen dabei oftmals sogenannte Direkt-Antriebe zum Einsatz, d.h. zwischen die CNC-gesteuerten Servomotoren und die damit bewegte Maschinenachse ist kein Getriebe mehr zwischengeschaltet.

Eine moderne Wälzfräsmaschine läßt sich somit als CNC-gesteuerte Sechs-Achs-Maschine mit Servoantrieben charakterisieren.

< > [ ]

Der Erfindung liegt die Aufgabe zugrunde, Verzahnungsmaschinen der eingangs genannten Art nochmals zu verbessern, insbesondere hinsichtlich ihrer Steifigkeit.

Diese Aufgabe wird von der Erfindung durch eine Weiterbildung der Verzahnungsmaschine der eingangs genannten Art gelöst, die im wesentlichen gekennzeichnet ist durch die kennzeichnenden Merkmale von Anspruch 1.

Dabei beruht die Erfindung auf der Erkenntnis, daß der bislang für das Verschwenken der Werkzeughalterung eingesetzte Antrieb die Maschinensteifigkeit aufgrund des von ihm nebst erforderlichen Anschlüssen eingenommenen Bauraums beeinträchtigt. Ähnliches gilt bei einem anstatt des Direktantriebs vorgesehenen Antriebs mit einem zwischengeschalteten Getriebe, etwa Zahnradgetriebe, im vorher von dem Direktantrieb eingenommenen Bauraum.

Zum anderen beruht die Erfindung auf der Erkenntnis, daß dieser Antrieb überhaupt ersetzbar ist im Wege der Bewegungsübertragung über einen Ausleger. Insbesondere ist eine Drehbarkeit um eine volle Umdrehung oder auch bereits weniger entbehrlich. Bevorzugt erfolgt die Ankopplung des Auslegers unmittelbar im Bereich der Anordnung, in der auch die Werkzeughalterung gelegen ist. Es könnte beispielsweise ein in Richtung der Shift-Achse verlaufender Ausleger sein. Vereinfachend ausgedrückt ist die drehbare Lagerung somit primär nur eine drehbare Lagerung und nicht eine drehbar angetriebene Lagerung.

Allein der eingesparte Bauraum im Bereich der drehbaren Lagerund erlaubt die Realisierung einer höheren Steifigkeit der Gesamtmaschine, da letzterer für zusätzliche Versteifungen nutzbar wird.

In einer bevorzugten Ausführungsform kann die drehbar gelagerte Anordnung von einer Schlittenanordnung getragen werden. Insbesondere kann der Träger ein Vertikalschlitten sein. Die Erfindung erlaubt somit weiterhin auch die bislang eingesetzte Anordnung vorgesehener weiterer Maschinenachsen.

Erfindungsgemäß ist der Antrieb des ersten Linearschlittens in einer Betriebsstellung der Verzahnungsmaschine ein Funktionselement der Bewegungseinrichtung. Mit anderen Worten wird gemäß dieser Weiterbildung nicht nur das Konzept eines Direktantriebes für die Drehbewegung aufgegeben, sondern das Konzept eines eigens für diese Achse vorgesehenen Antriebs überhaupt, indem die Drehlageneinstellung über den Antrieb eines Linearschlittens einer Schlittenanordnung realisiert wird.

Dieser weitergehende Aspekt wird von der Erfindung auch unabhängig von der Art der Bewegungsübertragung der Bewegungseinrichtung offenbart. Die Erfindung offenbart somit als eigenständig auch eine Verzahnungsmaschine zum Bearbeiten von Verzahnungen mit einem um seine Werkzeugachse drehbar angetriebenen Verzahnungswerkzeug, mit einer eine zur Aufnahme des Verzahnungswerkzeugs vorgesehene Werkzeughalterung aufweisenden und zur Einstellung einer gewünschten Orientierung der Werkzeugachse drehbar an einem Träger gelagerten Anordnung, einer Bewegungseinrichtung, mit der eine Einstellung der Drehlage der Anordnung bewirkbar ist, und einer Arretiereinrichtung, mit der die Anordnung gegen ein Verdrehen aus einer eingestellten Drehlage arretierbar ist, wobei der Träger wenigstens einen von einem Antrieb bewegbaren Linearschlitten aufweist, und der Antrieb des Linearschlittens in einer Betriebsstellung der Verzahnungsmaschine den Antrieb der Bewegungseinrichtung bildet.

Erfindungsgemäß ist vorgesehen, daß ein Gegenlager vorgesehen ist, das mit der der drehfesten Ankopplung entgegengesetzten Seite des Auslegers zusammenwirkt. Das Gegenlager ist ebenfalls ein Funktionselement der Bewegungseinrichtung und liefert die die Drehung der Anordnung erst ermöglichenden Gegenkräfte in Form von Abstützkräften, während die ursächliche aktive Quelle der Antriebskraft eine translatorische Bewegung der Anordnung selbst bewirkt.

In einer Weiterbildung dieser bevorzugten Variante erfolgt das Zusammenwirken in Form eines abrollenden Abstützens. Dies sorgt für eine geringere Beanspruchung und längere Standzeit der Funktionselemente der Bewegungseinrichtung.

In einer besonders bevorzugten Ausführungsform wirkt der Antrieb des ersten Linearschlittens in einer zweiten Betriebsstellung der Verzahnungsmaschine nicht als Funktionselement der Bewegungseinrichtung. In der zweiten Betriebsstellung ist somit eine motorische Verstellbarkeit der Drehlage der Anordnung unabhängig von der Arretiereinrichtung nicht möglich. In der zweiten Betriebsstellung erfolgt dann bevorzugt die Bearbeitung der Verzahnungen mit dem Verzahnungswerkzeug.

In einer bevorzugten Ausführungsform wird ein Übergang zwischen der ersten und der zweiten Betriebsstellung durch eine quer zur Bewegungsrichtung des ersten Linearschlittens verlaufenden Relativbewegung zwischen dem ersten Linearschlitten und dem Gegenlager bewirkt.

In diesem Zusammenhang könnte sich der erste Linearschlitten auf einem weiteren Linearschlitten, insbesondere Horizontalschlitten abstützten, so daß die Trägerstruktur für die drehbare Anordnung als Kreuzschlitten ausgebildet ist. Bewirkt man die Relativbewegung für den Übergang zwischen der ersten und der zweiten Betriebsstellung durch eine Bewegung des zweiten Linearschlittens, erhält letzterer eine Doppelfunktion, hier für die Zustellbewegung einerseits und den Übergangswechsel zwischen den beiden Betriebsstellungen.

Zweckmäßig ist vorgesehen, daß die einstellbaren Drehlagen der Anordnung wenigstens 90° abdecken, insbesondere die einstellbaren Orientierungen der Werkzeugachse ± 45° gegenüber der Horizontalen abdecken. Dies reduziert die erforderlichen Linearverfahrwege zur Drehung der den Werkzeugkopf tragenden Anordnung. Im übrigen wird dazu bevorzugt vorgesehen, daß die Längserstreckung des Gegenlagers in Bewegungsrichtung des ersten Linearschlittens bis in den mittigen Bereich der Verfahrbahn des Linearschlittens reicht. Für das Beispiel einer Vertikalwälzfräsmaschine mit vertikal orientierter Werkstückspindelachse erfolgt das Zusammenwirken von Gegenlager und Ausleger somit bevorzugt auf einem Höhenniveau, das der halben Höhe der maximalen Höhenverfahrbahn des ersten Linearschlittens näherliegt als den Bahnumkehrpunkten, also Bahnenden.

In einer besonders bevorzugten Gestaltung ist die Verzahnungsmaschine als Wälzfräsmaschine ausgebildet, wobei die Werkzeughalterung als ein Fräskopf zur Aufnahme eines Wälzfräsers gestaltet ist. Aber auch bei anderen Verzahnungsmaschinen kommt die Erfindung vorteilhaft zum Einsatz, wie etwa beim Wälzschleifen, Wälzschälen (Power-Skiving) oder auch beim Wälzstoßen (bei letzterem Drehung in X/Z-Ebene statt Y/Z-Ebene).

Die Erfindung wird auch in verfahrenstechnischer Hinsicht unter Schutz gestellt. Somit betrifft die Erfindung auch ein Verfahren zum Bearbeiten einer Verzahnung mit < > , bei dem man die vorgegebene Orientierung der Werkzeugachse einstellt und arretiert, das im wesentlichen dadurch gekennzeichnet ist, daß die Einstellung der Orientierung unter Mitwirkung eines drehfest an eine drehbar gelagerte Anordnung angekoppelten Ausleger mitwirkt, wobei die Orientierung der Werkzeugachse bezüglich dieser Anordnung drehfest ist.

In der besonders bevorzugten Ausgestaltung erfolgt die Einstellung der Werkzeugachsorientierung unter Mitwirkung eines Antriebs, der für eine Relativbewegung zwischen . Verzahnungswerkzeug und bearbeiteter Verzahnung eingesetzt wird (bei arretierter Werkzeugachsorientierung). Wie oben bereits erläutert, kann dies auch unabhängig von der Art der lösbaren Ankopplung zwischen diesem Antrieb und der drehbaren Anordnung erfolgen.

Insoweit liefert die Erfindung auch ein Verfahren zum Bearbeiten einer Verzahnung mit einem um seine Werkzeugachse drehbar angetriebenen Verzahnungswerkzeug unter einer vorgegebenen Orientierung der Werkzeugachse, bei dem man zunächst die vorgegebene Orientierung der Werkzeugachse einstellt und arretiert und danach vor und/oder während der Bearbeitung eine Relativbewegung zwischen Verzahnungswerkzeug und bearbeiteter Verzahnung ausführt, das im wesentlichen dadurch gekennzeichnet ist, daß die Einstellung der Werkzeugachsorientierung und die Ausführung der Relativbewegung mit demselben Antrieb erfolgt.

Die Vorteile der erfindungsgemäßen Verfahren ergeben sich aus der obigen Darstellung der erfindungsgemäßen Vorrichtung.

Weitere Merkmale, Einzelheiten und Vorteile der Erfindung ergeben sich aus der nachfolgenden Beschreibung mit Bezug auf die beiliegenden Figuren, von denen
- Figs. 1a, b und c: schematisch das Grundprinzip der Erfindung verdeutlichen, und
- Fig. 2: eine Schnittansicht durch eine gemäß der Erfindung gebildete Lagerung für eine Werkzeughalterung zeigt.

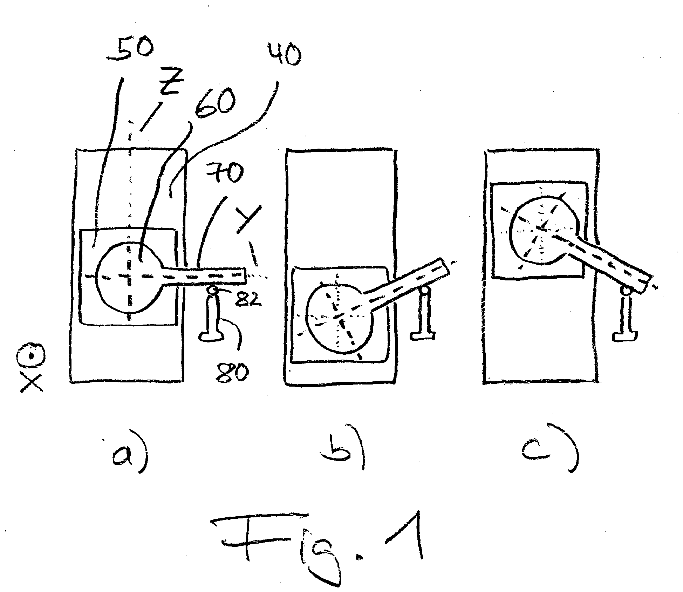

In Fig. 1 ist zunächst schematisch eine Kreuzschlittenanordnung gezeigt, die aus einem in Bewegungsrichtung X (senkrecht zur Papierebene) bewegbaren Horizontalschlitten 40 und einem an einer zu der (nicht dargestellten) Werkstückspindel weisenden Seite des Horizontalschlittens 40 angeordneten Vertikalschlittens 50 aufgebaut ist. Letzterer ist in Vertikalrichtung Z verfahrbar.

An dem Vertikalschlitten 50 drehbar gelagert ist eine Anordnung 60, auf der in üblicher Weise ein nicht dargestellter Wälzfräskopf über einen weiteren Shiftschlitten angeordnet ist. Die Drehachse eines im Wälzfräskopf aufgenommenen Wälzfräsers ist bezüglich ihrer Orientierung in der senkrecht zur Bewegungsachse X des Horizontalschlittens 40 verlaufenden Ebene nur durch Drehung der Anordnung 60 änderbar. Beispielsweise verläuft sie parallel zur Richtung, in der ein Ausleger 70 von der Anordnung auskragt. In Fig. 1a verläuft diese Richtung Y horizontal und senkrecht zur Bewegungsachse X des Horizontalschlittens 40.

Zur Einstellung der Drehlage der Werkzeugachse, also der Orientierung der Richtung Y in der normalen Ebene zur Bewegungsrichtung X, wird der Horizontalschlitten 40 in eine Position gefahren, in der der Ausleger 70 oberhalb einer Stütze 80 zu liegen kommt. Dabei wird bevorzugt der Vertikalschlitten 50 so verfahren, daß der Ausleger 70 nahe seines freien Endes auf einem am oberen Ende der Stütze 80 vorgesehenen Kugelgelenk zu liegen kommt. All dies geschieht noch bei Arretierung der Anordnung 60 in der vorhandenen Drehlage durch eine nicht dargestellte Arretiereinrichtung, welche wie im Stand der Technik üblich für die Fixierung des Wälzfräskopfes vorgesehen ist. Alternativ ist es auch denkbar, daß die Stütze am Horizontalschlitten angeordnet und relativ zu diesem beweglich ist. Dann kann die Drehlage der Werkzeugachse in jeder Position des Horizontalschlittens erfolgen.

Ist diese Auflage erreicht, beispielsweise in der in Fig. 1 gezeigten Drehlage mit horizontaler Werkzeugachse, wird diese Arretierung gelöst.

Daraufhin kann die Werkzeugachse (ausgehend von der in Fig. 1a gezeigten Lage) im Uhrzeigersinn gedreht werden, indem der Vertikalschlitten 50 nach oben verfahren wird, wie in Fig. 1c dargestellt, oder im Gegenuhrzeigersinn, wenn der Vertikalschlitten 50 nach unten bewegt wird, wie in Fig. 1b dargestellt.

Sobald die gewünschte Drehlage der Anordnung 60 erreicht ist, was einer Steuereinrichtung der Wälzfräsmaschine durch einen nicht gezeigten, die Drehlage der Anordnung 60 erfassenden Sensors signalisiert wird, wird die Arretiereinrichtung aktiviert und fixiert die Anordnung 60 in dieser eingestellten Drehlage. In dieser ersten Betriebsstellung, die in diesem Ausführungsbeispiel durch die Verfahrstellung des Horizontalschlittens 40 bestimmt ist, der ein Zusammenwirken des Auslegers 70 mit der Stütze 80 erlaubt, kann die Drehlageneinstellung der Anordnung 60 somit über einen bevorzugt CNC-gesteuerten Antrieb des Vertikalschlittens 50 vorgenommen werden.

Zur Bearbeitung in einer zweiten Betriebsstellung der Werkstückmaschine wird der Horizontalschlitten 40 aus dieser Verfahrstellung heraus in Richtung auf die Werkstückspindel verfahren, so daß der Vertikalschlitten 50 in dieser zweiten Betriebsstellung von der Stütze 80 ungehindert entlang seiner Verfahrachse Z beweglich ist und somit die übliche werkstückachsparallele Vorschubbewegung beim Wälzfräsen ausführen kann.

Man erkennt, daß durch den Einsatz des Auslegers 70 eine Ankopplung der Anordnung 60 an einen Direktantrieb oder einen an einen eigenen Antrieb angekoppelten Getriebezug, wie üblicherweise in diesen Maschinen durch drehend angetriebene Lagerungen realisiert, nicht mehr erforderlich ist.

Die Erfindung ist nicht auf die in dem dargestellten Ausführungsbeispiel beschriebene konkrete Ausgestaltung der Verzahnungsmaschine eingeschränkt. Beispielsweise könnte auch die Stütze 80 konstruktiv ohne Kugelgelenk 82 ausgestaltet sein . Im letzteren Fall könnte der Träger 80 beispielsweise auch teleskopartig gestaltet sein und in der zweiten Betriebsstellung vollständig in ein nicht dargestelltes Maschinenbett eingefahren werden.

Ebenfalls könnte in der ersten Betriebsstellung eine Kraftübertragung der Bewegung des Vertikalschlittens auch anders auf die Anordnung übertragen werden, beispielsweise über eine Zahnrad-/Zahnstangenverbindung. Diese Verbindung wäre beim Übergang von der ersten Betriebsstellung in die zweite Betriebsstellung zu entkoppeln. Das Entkoppeln könnte dabei manuell, beispielsweise über einen Betätigungshebel erfolgen, oder automatisch durch Ankopplung an die Bewegung des Horizontalschlittens 40, sofern kein zusätzlicher Verstellantrieb verwendet werden soll.

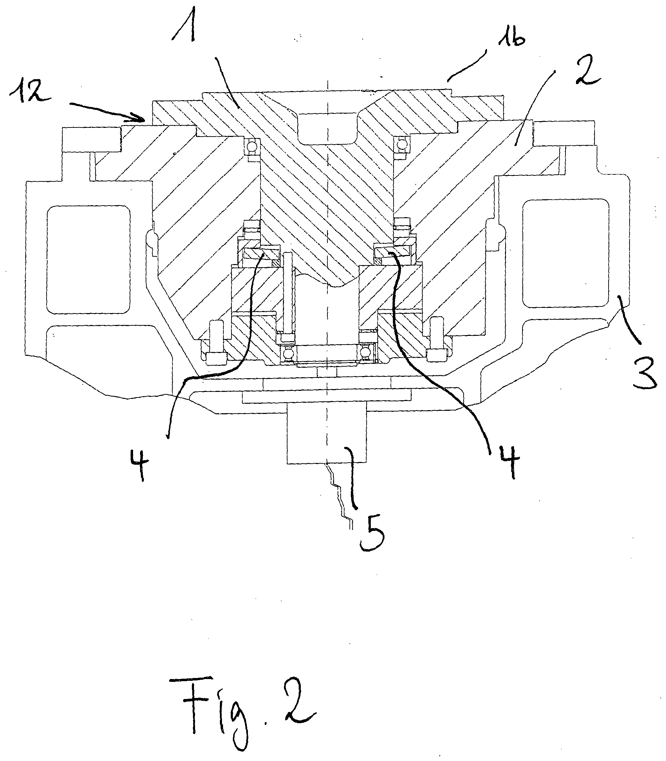

In Fig. 2 ist ein drehbar gelagertes Teil 1 in einer Schnittansicht dargestellt. An dessen freiliegender Seite 1b läßt sich wie üblich beispielsweise ein nicht dargestellter Wälzfräskopf mit Werkzeugspindel befestigen.

Die drehbare Lagerung von Teil 1 in einem drehfesten Teil 2 ist unbeeinträchtigt von einem Antrieb oder seiner Getriebeankopplung. Während der Bearbeitung sorgt eine in Form einer Tellerfeder 4 gebildete Arretiereinrichtung dafür, daß Teil 1 gegenüber Teil 2 nicht mehr verdrehbar ist (zweite Betriebssteilung), indem Teil 1 im Bereich 12 an Teil 2 anliegt und gegen dieses gepreßt wird. Durch Verschiebung von Teil 1 gegenüber Teil 2 in axialer Richtung (X) entfällt dieser Kraftschluß und Teil 1 läßt sich gegenüber Teil 2 in eine gewünschte Drehlage verdrehen, wie anhand von Fig. 1 erläutert.

Teil 2 ist Teil eines hier Vertikalschlittens (Bewegungsrichtung Z senkrecht zur Papierebene von Fig. 2), der wiederum verschieblich in Radialschlitten 3 (Bewegungsrichtung X) gelagert ist, wie ansonsten üblich. Sensor 5 erfaßt die Drehlage von Teil 1 gegenüber Teil 2 und übermittelt diese an eine nicht gezeigte Steuerung der Maschine.

Da die Lagerung des Teils 1 in Teil 2 keinen Raum mehr für einen Antrieb oder die Ankopplung eines Antriebs mittels eines Getriebes, beispielsweise Schneckengetriebes, mehr bereitstellen muß, läßt sich die Lagerung mit signifikant erhöhter Steifigkeit ausführen, wodurch sich ein Hauptvorteil der Erfindung ergibt. Ein weiterer Vorteil der Erfindung liegt wie oben beschrieben in der Möglichkeit, den zur Bewegung des in dieser Ausführungsform Vertikalschlittens (Z) vorgesehenen Antrieb auch dazu zu nutzen, die Drehlageneinstellung von Teil 1 gegenüber Teil 2 zu ändern, so daß ein gesamter Antrieb eingespart werden kann.

Die Erfindung ist nicht auf die anhand der Figuren beschriebenen Ausführungsbeispiele eingeschränkt. Der Schutzumfang wird durch die nachstehenden Ansprüche definiert.

## Patentansprüche

1. Verzahnungsmaschine in Form einer Wälzfräsmaschine, Wälzschleifmaschine, Wälzschälmaschine oder Wälzstoßmaschine zum wälzenden Bearbeiten von Verzahnungen mit einem um seine Werkzeugachse drehbar angetriebenen Verzahnungswerkzeug, mit
einer eine zur Aufnahme des Verzahnungswerkzeugs vorgesehene Werkzeughalterung aufweisenden und zur Einstellung einer gewünschten Orientierung der Werkzeugachse (Y) drehbar an einem Träger (50, 40) gelagerten Anordnung (60),
einer Bewegungseinrichtung, mit der eine Einstellung der Drehlage der Anordnung bewirkbar ist, und
einer Arretiereinrichtung, mit der die Anordnung gegen ein Verdrehen aus einer eingestellten Drehlage arretierbar ist,
**gekennzeichnet durch** einen drehfest an die Anordnung angekoppelten Ausleger (70), der ein Funktionselement der Bewegungseinrichtung ist, wobei die Bewegungseinrichtung ein mit der der drehfesten Ankopplung entgegengesetzten Seite des Auslegers zusammenwirkendes Gegenlager (82, 80) aufweist, welches ein die Drehung der Anordnung (60) ermöglichenden Gegenkräfte in Form von Abstützkräften lieferndes Funktionselement der Bewegungseinrichtung ist, während ein Antrieb der Bewegungseinrichtung in einer Betriebsstellung der Verzahnungsmaschine von einem eine translatorische Bewegung der Anordnung (60) bewirkenden Antrieb eines ersten Linearschlittens (50) des Trägers (50, 40) gebildet ist.

2. Verzahnungsmaschine nach Anspruch 1, bei der der erste Linearschlitten (50) ein Vertikalschlitten ist.

3. Verzahnungsmaschine nach Anspruch 1 oder 2, bei der das Zusammenwirken in Form eines abrollenden Abstützens erfolgt.

4. Verzahnungsmaschine nach einem der Ansprüche 1 bis 3, bei der der Antrieb des ersten Linearschlittens in einer zweiten Betriebsstellung der Verzahnungsmaschine nicht als Funktionselement der Bewegungseinrichtung wirkt.

5. Verzahnungsmaschine nach einem der Ansprüche 1 bis 4, bei der ein Übergang zwischen der ersten und der zweiten Betriebsstellung durch eine quer zur Bewegungsrichtung des ersten Linearschlittens verlaufenden Relativbewegung zwischen dem ersten Linearschlitten (50) und dem Gegenlager (82, 80) bewirkbar ist.

6. Verzahnungsmaschine nach einem der Ansprüche 1 bis 5, bei der sich der erste Linearschlitten (50) auf einem weiteren Linearschlitten (40), insbesondere Horizontalschlitten abstützt.

7. Verzahnungsmaschine nach Anspruch 5 und 6, bei der die Relativbewegung durch eine Bewegung des zweiten Linearschlittens bewirkbar ist.

8. Verzahnungsmaschine nach einem der vorhergehenden Ansprüche, bei der die einstellbaren Drehlagen der Anordnung wenigstens 90° abdecken, insbesondere die einstellbaren Orientierungen der Werkzeugachse ± 45° gegenüber der Horizontalen abdecken.

9. Verzahnungsmaschine nach einem der vorhergehenden Ansprüche, die als Wälzfräsmaschine ausgebildet ist und als Verzahnungswerkzeug einen Wälzfräser aufnehmen kann.

10. Verfahren zum Bearbeiten einer Verzahnung mit einer Verzahnungsmaschine nach einem der Ansprüche 1 bis 9, bei dem
man zunächst die vorgegebene Orientierung der Werkzeugachse einstellt und arretiert, und danach
vor und/oder während der Bearbeitung eine Relativbewegung zwischen Verzahnungswerkzeug und bearbeiteter Verzahnung ausführt,
wobei die Einstellung der Werkzeugachsorientierung und die Ausführung der Relativbewegung mit demselben Antrieb erfolgt.

## Claims

1. A gear-cutting machine in the form of a gear-hobbing machine, gear-grinding machine, power skiving machine or gear shaper for the rolling machining of gear teeth with a gear-cutting tool driven in a rotary movement around its tool axis, comprising
an arrangement (60) which has a tool holder for accommodating the gear-cutting tool and is rotatably mounted on a carrier (50, 40), allowing the tool axis (Y) to be set in a desired orientation,
a movement device by means of which the rotary position of the arrangement can be set, and a locking device which allows the arrangement to be secured against being rotated out of a set rotary position,
**characterised by** a protruding arm (70) which is coupled in a non-rotating connection to the arrangement and is a functional element of the movement device, wherein the movement device has a counter-bearing (82, 80) that cooperates with the side of the protruding arm on the opposite side to the non-rotating connection, which counter-bearing is a functional element of the movement device and as such provides the counterforces facilitating the rotation of the arrangement (60) in the form of support forces, whereas a drive for the movement device in an operating position of the gear-cutting machine is formed by a drive of a first linear carriage (50) of the carrier (50, 40), said drive triggering a translational movement of the arrangement (60).

2. The gear-cutting machine in accordance with claim 1, wherein the first linear carriage (50) is a vertical carriage.

3. The gear-cutting machine in accordance with claim 1 or 2, wherein the cooperation takes the form of a rolling support.

4. The gear-cutting machine in accordance with one of claims 1 to 3, wherein the drive of the first linear carriage in a second operating position of the gear-cutting machine is not a functional element of the movement device.

5. The gear-cutting machine in accordance with one of claims 1 to 4, wherein a transition between the first and second operating positions can be effected by a relative movement between the first linear carriage (50) and the counter bearing (82, 80), wherein said relative movement runs transverse to the movement direction of the first linear carriage.

6. The gear-cutting machine in accordance with one of claims 1 to 5, wherein the first linear carriage (50) is supported by a further linear carriage (40), in particular a horizontal carriage.

7. The gear-cutting machine in accordance with claims 5 and 6, wherein the relative movement can be effected by a movement of the second linear carriage.

8. The gear-cutting machine in accordance with one of the preceding claims, wherein the settable rotary positions of the arrangement cover a range of at least 90°, and in particular the settable orientations of the tool axis cover a range of ±45° relative to the horizontal.

9. The gear-cutting machine in accordance with one of the preceding claims, which is configured as a gear-hobbing machine and can accommodate a hob as a gear-cutting tool.

10. A method for the machining of gear teeth with a gear-cutting machine in accordance with one of claims 1 to 9, wherein
the tool axis is first set to, and locked in, the prescribed orientation, and then
a relative movement is executed between the tooth-cutting tool and the machined toothing prior to and/or during the machining,
wherein the setting of the orientation of the tool axis and the execution of the relative movement are effected using the same drive mechanism.

## Revendications

1. Machine à tailler les dentures sous la forme d'une machine à tailler à la fraise-mère, d'une machine de meulage par génération, d'une machine de power skiving ou d'une machine à tailler par outil-pignon pour un usinage par génération de dentures à l'aide d'un outil à tailler les dentures entraîné en rotation sur son axe d'outil, comprenant
un système (60) qui présente un porte-outil servant à recevoir l'outil à tailler les dentures et qui est monté à rotation sur un support (50, 40) pour régler l'orientation souhaitée de l'axe d'outil (Y),
un dispositif de déplacement permettant de régler la position en rotation dudit système, et
un dispositif de blocage permettant de bloquer ledit système pour l'empêcher de sortir d'une position en rotation réglée,
**caractérisée par** un bras (70) couplé solidaire en rotation audit système et constituant un élément fonctionnel du dispositif de déplacement, ledit dispositif de déplacement présentant un contre-appui (82, 80) interagissant avec le côté du bras qui est opposé audit couplage solidaire en rotation, lequel contre-appui constitue un élément fonctionnel du dispositif de déplacement fournissant les forces contraires permettant audit système (60) de tourner, sous la forme de forces d'appui, tandis qu'un dispositif d'entraînement dudit dispositif de déplacement est formé, dans une position d'exploitation de la machine à tailler les dentures, par un dispositif d'entraînement appartenant à un premier chariot linéaire (50) du support (50, 40) et provoquant un mouvement de translation du système (60).

2. Machine à tailler les dentures selon la revendication 1, dans laquelle le premier chariot linéaire (50) est un chariot vertical.

3. Machine à tailler les dentures selon la revendication 1 ou 2, dans laquelle l'interaction se produit sous la forme d'un appui à roulement.

4. Machine à tailler les dentures selon l'une des revendications 1 à 3, dans laquelle le dispositif d'entraînement du premier chariot linéaire, dans une deuxième position d'exploitation de la machine à tailler les dentures, n'a pas fonction d'élément fonctionnel du dispositif de déplacement.

5. Machine à tailler les dentures selon l'une des revendications 1 à 4, dans laquelle une transition entre la première et la deuxième position d'exploitation est réalisable par le biais d'un mouvement relatif, transversal au sens du déplacement du premier chariot linéaire, entre le premier chariot linéaire (50) et le contre-appui (82, 80).

6. Machine à tailler les dentures selon l'une des revendications 1 à 5, dans laquelle le premier chariot linéaire (50) est en appui sur un autre chariot linéaire (40), notamment un chariot horizontal.

7. Machine à tailler les dentures selon la revendication 5 et 6, dans laquelle le mouvement relatif est réalisable par le biais d'un mouvement du deuxième chariot linéaire.

8. Machine à tailler les dentures selon l'une quelconque des revendications précédentes, dans laquelle les positions en rotation réglables du système couvrent au moins 90°, et notamment les orientations réglables de l'axe d'outil couvrent ±45° par rapport à l'horizontale.

9. Machine à tailler les dentures selon l'une quelconque des revendications précédentes, conçue sous la forme d'une machine à tailler à la fraise-mère et pouvant recevoir une fraise-mère à titre d'outil à tailler les dentures.

10. Procédé d'usinage d'une denture à l'aide d'une machine à tailler les dentures selon l'une des revendications 1 à 9, dans lequel
on règle tout d'abord l'orientation prédéterminée de l'axe d'outil, que l'on bloque, puis
on fait exécuter, avant et/ou pendant l'usinage, un mouvement relatif entre l'outil à tailler les dentures et la denture usinée,
ledit réglage de l'orientation de l'axe d'outil et ladite exécution du mouvement relatif ayant lieu à l'aide du même dispositif d'entraînement.
